# EUROPEAN PATENT SPECIFICATION

(11) **EP 2 142 952 B1**
(45) Date of publication and mention of the grant of the patent: **16.03.2016**
(21) Application number: 08753393.1
(22) Date of filing: 08.05.2008
(51) Int. Cl.: G02B 6/44

(54) **RIPCORD OF OPTIC CABLES AND METHOD OF MANUFACTURING THE SAME**
REISSFADEN EINES GLASFASERKABELS UND HERSTELLUNGSVERFAHREN DAFÜR
CORDE DE DÉCHIRURE DE CÂBLES OPTIQUES ET PROCÉDÉ DE FABRICATION DE CELLE-CI

(30) Priority: 08.05.2007 KR 20070044420; 08.05.2007 KR 20070044422; 08.05.2007 KR 20070044426; 08.05.2007 KR 20070044430
(43) Date of publication of application: 13.01.2010
(73) Proprietor: Kolon Industries, Inc, Kyunggi-do 427-040 (KR)
(72) Inventor: LEE, Chang-Bae, Daegu 706-781 (KR); PARK, Tae-Hak, Gyeongsangbuk-do 718-840 (KR); KIM, Jin-Woo, Daegu 702-812 (KR)
(74) Representative: Ter Meer Steinmeister & Partner
(86) International application number: PCT/KR2008/002597
(87) International publication number: WO 2008/136649

(56) References cited:
- EP-A1- 0 969 302
- EP-A2- 1 168 024
- JP-A- 11 185 534
- JP-A- 11 185 535
- JP-A- H02 135 308
- JP-A- H11 217 727
- KR-A- 20020 034 029
- KR-A- 20060 081 266
- US-A- 3 953 167
- US-A- 4 705 523
- US-A- 5 139 873
- US-A- 5 442 722
- "Chapter on Viscosity", MSE 5473 Course of University of Utah, 18 February 2004 (2004-02-18), pages 78-88, XP055177862, Retrieved from the Internet: URL:http://www.ias.ac.in/initiat/sci_ed/re sources/chemistry/Viscosity.pdf [retrieved on 2015-03-19]

## Description

### TECHNICAL FIELD

The present invention relates to a ripcord for optic cables and a method of manufacturing the same, and more particularly, to a ripcord for optic cable which comprises a folded and twisted yarn formed by folding and twisting together wholly aromatic polyamide filaments and a coating layer containing a coloring agent formed on a surface of the folded and twisted yarn, so that the ripcord can be easily distinguished from reinforcing materials for the optic cable at installation or repairs of the optic cable, thereby enhancing workability thereof and, in addition, a method of manufacturing the same.

### BACKGROUND ART

A ripcord for optic cable is so called "a cutting fiber," which helps a resin coating film of an optic cable to be easily cut and removed.

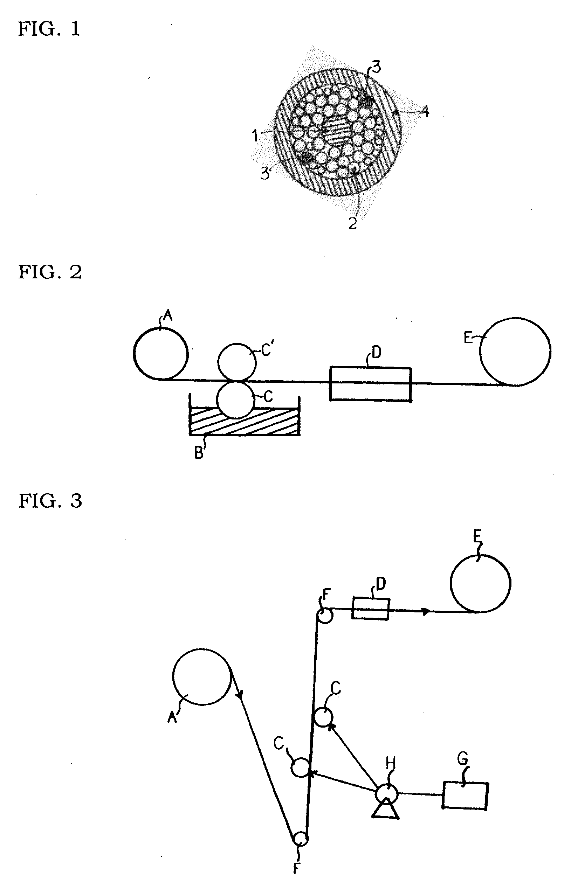

As shown in Fig. 1, the optic cable generally includes an optic fiber 1 at a center of the optic cable, a reinforcing material 2 covering and protecting the optic fiber 1, ripcords 3 mixed in the reinforcing material 2, and a resin coating layer 4 formed outside both of the reinforcing material 2 and the ripcords 3.

Fig. 1 is a schematic cross-sectional view of a conventional optic cable.

As the reinforcing material 2, a bundle of wholly aromatic polyamide filaments is mostly used, which is typically formed by folding and twisting together a plurality of wholly aromatic polyamide filaments in non-twisted states. Such a filament bundle may be called "folded and twisted yarn."

The reinforcing material 2 is used for protecting the optic fiber 1.

The ripcords 3 function to easily remove the resin coating layer 4 of the optic cable for repairing or the like. More particularly, with regard to management or repairs of the optic cable, a resin coating layer 4 of the optic cable can be easily stripped from the optic cable by pulling the ripcords 3.

In order to simply cut and remove the resin coating layer 4 of the optic cable during repairing, the ripcords 3 are desirably distinguished from the reinforcing material 2.

Conventional ripcords for optic cables mostly include folded and twisted yarns, each of which is usually produced by folding and twisting together a plurality of wholly aromatic polyamide filaments (see JP 11217727). However, since such ripcord comprises the wholly aromatic polyamide filaments only, this has disadvantages including, for example, poor dyeing properties, reduced dyeing intensity, low dyeing fastness, high production cost, etc. in spite of excellent mechanical properties such as modulus.

Especially, the known ripcord 3 for optic cable with poor dyeing properties and dyeing fastness involved a problem that the ripcord is difficult to distinguish from the reinforcing material 2 of the optic cable during repairing.

As another ripcord for optic cable, Korean Patent Registration No. 0373235 proposed a ripcord for optic cable with 1,500 to 12,000 denier produced by folding and twisting together polyester yarns with the number of twists ranging from 200 to 500 per meter. This ripcord consists of polyester yarns only, and thus, has favorable dyeing properties enough to easily distinguish the ripcord from other materials. However, when comparing it with a ripcord formed of wholly aromatic polyamide fibers, this ripcord needs higher denier and larger weight to have desired mechanical properties such as modulus.

A further technique described in Japanese Patent Laid-Open No. 2005-148150 is that a ripcord is produced by covering an outer side of a fibrous material with a resin such as polytetrafluoroethylene resin, silicon dispersed polyethylene resin, silicon grafted polyethylene resin or fluoride resin dispersed polyethylene resin. US Patent Laid-Open No. 2005-036750 proposed a ripcord with improved smoothness coated with silicon oil or wax in order to prevent damage of the ripcord. However, although these techniques can improve smoothness and abrasion resistance of a ripcord, there is still a problem that the ripcord is difficult to distinguish from reinforcing materials 2 used therein.

Additionally, US Patent Laid-Open No. 2003-095763 disclosed a colored buffer tube for a ripcord in order to easily distinguish the ripcord from other materials. Korean Utility Model Registration No. 0352977 suggested a multiple linear core type cable that comprises (i) a linear core unit assembly including a linear core assembly and a unit jacket enclosing the same and (ii) a cable jacket covering the linear core unit assembly in a longitudinal direction, and includes a marker tape with marking codes between the linear core assembly and the unit jacket. But, the above known arts cannot enhance abrasion resistance although these allow the ripcord or the linear unit to be easily distinguished from other materials.

As described above, conventional techniques concerning ripcords for optic cables involve a disadvantage in simultaneously exhibiting an effect of easily distinguishing the ripcord from other materials as well as excellent abrasion resistance and mechanical properties of the ripcord.

### DISCLOSURE OF THE INVENTION

### (TECHNICAL PROBLEM)

Accordingly, the present invention is directed to solve the problems described above in regard to conventional methods and an object of the present invention is to provide a ripcord for optic cable as defined in claim 1 which has a coating layer containing a colorant on a surface of a folded and twisted yarn formed by folding and twisting together wholly aromatic polyamide filaments, so that the ripcord is easily distinguished from reinforcing materials of the optic cable during installation and repairs of the optic cable and shows excellent mechanical properties and, in addition, a method for manufacturing the same as defined in claim 10.

A further object of the present invention is to provide a hybrid type ripcord for optic cable, comprising a folded and twisted yarn formed by folding and twisting together wholly aromatic polyamide filaments and additional functional filaments for industrial use, so as to exhibit excellent mechanical properties simultaneously with additional properties such as dyeing properties.

### (TECHNICAL MEANS TO SOLVE THE PROBLEM)

Hereinafter, the present invention will be described in more detail with reference to accompanying drawings.

In order to accomplish the above objects, the present invention provides a ripcord for optic cable that has a coating layer containing a binder and a colorant dispersed in the binder, which is formed on a surface of a folded and twisted yarn formed by folding and twisting together wholly aromatic polyamide filaments.

The present invention also provides a method of manufacturing a ripcord for optic cable, which includes applying a coating solution containing a binder and a colorant dispersed in the binder to a surface of a folded and twisted yarn formed by folding and twisting together wholly aromatic polyamide filaments to form a coating layer on the folded and twisted yarn and winding the coated yarn over a winding machine.

The colorant dispersed in the binder preferably includes pigment or dye.

The colorant has an average particle size ranging from 0.01 to 100µm and, preferably, 0.1 to 10µm.

If the average particle size is less than 0.01µm, the colorant is scattered and makes it difficult to conduct the coating process. On the other hand, with an average particle size of more than 100µm, the colorant is difficult to disperse in the binder.

Using a laser particle size analyzer Model LS 13320 (Tornado) available from BECKMAN a particle size of the colorant was measured five (5) times and the average value was calculated from the measured values for the particle size except upper and lower limits.

The binder comprises at least one polymer selected from glycol based polymers with a number average molecular weight ranging from 100 to 1,000.

The glycol based polymers include a polymer selected from a group consisting of polyethyleneglycol, polypropyleneglycol and polytetramethyleneglycol.

The binder is naturally hardened . without drying thus more economically advantageous than an aqueous polymer in view of production cost.

When the number average molecular weight of the glycol polymer based binder is beyond the desired range, it shows a viscosity so high or low that it may cause poor coating of the folded and twisted yarn.

In order to improve strength and dyeing properties of a ripcord for optic cable, the folded and twisted yarn formed by folding and twisting together wholly aromatic polyamide filaments preferably comprises (i) 50 to 99wt.% of the wholly aromatic polyamide filaments and (ii) 1 to 50wt.% of additional functional filaments for industrial use (hereinafter referred to as "functional industrial filament") selected from a group consisting of polyester filaments, polyamide filaments, polyvinylalcohol filaments, rayon filaments, polyolefin filaments and polybenzonite filaments.

If an amount of the wholly aromatic polyamide filaments in the ripcord for the optic cable according to the present invention is less than 50wt.%, in other words, an amount of the functional industrial filaments exceeds 50wt.%, mechanical properties such as modulus of the ripcord are lowered.

On the other hand, the ripcord does not effectively show additional properties such as dyeing properties and/or bulkiness in case that the amount of the functional industrial filaments is less than 1wt.%.

More particularly, polyamide filaments or rayon filaments can improve dyeing properties and dyeing fastness while polyethylene filaments with higher molecular weight enhance mechanical properties such as modulus of the ripcord.

The inventive ripcord for optic cable preferably has strength ranging from 50 to 100 kgf and total fineness ranging from 3,000 to 5,000 denier.

With the strength and the total fineness exceeding the above ranges, respectively, it is easier to remove a resin coating layer from the optic cable. But the ripcord is more difficult to manage or handle as it becomes stiff, and may cause increase in production cost. If both of the strength and the total fineness are less than the desired ranges, the ripcord has low mechanical properties and may cause the ripcord to snap when cutting and stripping the resin coating layer from the optic cable.

The method of manufacturing a ripcord for optic cable according to the present invention includes: applying a coating solution, which contains a binder and a colorant, to a surface of a folded and twisted yarn formed by folding and twisting together wholly aromatic polyamide filaments to form a coating layer; and winding the coated yarn over a winding machine.

In order to apply the coating solution to a surface of a folded and twisted yarn A comprising wholly aromatic polyamide filaments, there may be used, a method shown in Fig. 2 that passes the folded and twisted yarn A over a rotational coating roller C partially immersed in a tank B containing the coating solution, or a method shown in Fig. 3 that passes the folded and twisted yarn A over a coating roller fed with the coating solution from a tank G containing the coating solution by an injector H.

As shown in Fig. 2, it is preferable to adopt a squeezing roller C' mounted on a top of the coating roller C to squeeze the folded and twisted yarn A after applying the coating solution.

Next, a method of manufacturing a ripcord for optic cable according to the present invention will be described in more detail with reference to Fig. 2 and Fig. 3.

Fig. 2 and Fig. 3 are schematic views for illustrating a method of manufacturing a ripcord for optic cable according to the present invention.

As shown in Fig. 2, the inventive method comprises: passing a folded and twisted yarn A formed by folding and twisting together wholly aromatic polyamide filaments over a rotational coating roller C partially immersed in a tank B that contains a coating solution to apply the coating solution to a surface of the folded and twisted yarn A; and winding the dried yarn over a winder E to produce a ripcord for optic cable, which has a coating layer containing a colorant on a surface of the ripcord.

More preferably, a squeezing roller C' is mounted on a top of the coating roller C to squeeze the coated folded and twisted yarn.

As shown in Fig. 3, an alternative embodiment of the inventive method comprises: passing a folded and twisted yarn A formed by folding and twisting together wholly aromatic polyamide filaments over a coating roller C fed with a coating solution from a tank H that contains the coating solution by means of an injector H to apply the coating solution to a surface of the folded and twisted yarn A; and winding the dried yarn over a winder E to produce a ripcord for optic cable, which has a coating layer containing a colorant on a surface of the ripcord.

### (ADVANTAGEOUS EFFECTS)

A ripcord for optic cable according to the present invention has a coating layer containing a colorant on a surface of a folded and twisted yarn formed by folding and twisting together wholly aromatic polyamide filaments, so as to easily distinguish the ripcord from reinforcing materials of the optic cable at installation and repairs of the optic cable and have excellent mechanical properties such as high strength owing to inherent properties of the wholly aromatic polyamide filaments.

Especially, the inventive ripcord which has a coating layer containing fluorescent ingredients can be simply distinguished from the reinforcing materials of the optic cable even in a dark place such as a tunnel.

The inventive ripcord exhibits additional properties such as dyeing properties as well as mechanical properties such as modulus. Alternatively, the ripcord for optic cable produced according to the present invention has various advantages such as less decrease of strength in dyeing, superior dyeing fastness and dyeing properties, convenience in distinguishing the ripcord from other materials during repairs of the optic cable, and economical benefit in production.

### BRIEF DESCRIPTION OF THE DRAWINGS

The above objects, features and advantages of the present invention will become more apparent to those skilled in the related art in conjunction with the accompanying drawings. In the drawings:
Fig. 1 is a cross-sectional view of an optic cable;
Fig. 2 and Fig. 3 are schematic views illustrating a method of manufacturing a ripcord for optic cable according to the present invention.

### [Description of symbols for major parts in drawings]

| | |
|---|---|
| 1: optic fiber | 2: reinforcing material |
| 3: ripcord | 4: resin coating layer |
| A: bobbin for folded and twisted yarn comprising wholly aromatic polyamide filaments | |
| B: coating solution bath | C: coating roller |
| C': squeezing roller | D: dryer |
| E: winder | F: guide roller |
| G: coating solution tank | H: injector |

### BEST MODE FOR CARRYING OUT THE INVENTION

Hereinafter, the present invention will be described in more detail from the following examples and comparative examples with reference to the accompanying drawings.

However, these are intended to illustrate the invention as preferred embodiments of the present invention and do not limit the scope of the present invention.

### EXAMPLE 1

A folded and twisted yarn A with total fineness of 3,000 denier was prepared, which consisted of two strands of wholly aromatic polyamide filament each comprising 1,000 mono filaments with mono fineness of 1.5 denier.

As shown in Fig. 2, the prepared folded and twisted yarn was passed over a rotational coating roller C that was partially immersed in a tank B containing a coating solution which included (i) a polyethyleneglycol binder having a number average molecular weight of 400 and (ii) a colorant having an average particle size of 5µm dispersed in the binder to apply the coating solution to a surface of the folded and twisted yarn A to form a coating layer. Following this, the coated yarn was wound over a winder E to produce a ripcord 3 for optic cable.

The coating roller C was equipped with a squeezing roller C' at the top of the roller C.

After covering an optic fiber 1 with the produced ripcord 3 together with a reinforcing material 2 made of a folded and twisted yarn comprising wholly aromatic polyamide filaments, a resin coating layer 4 was formed over the prepared optic fiber to produce an optic cable with a cross section shown in Fig. 1.

Strength of the ripcord and convenience in distinguishing the ripcord from the optic cable were evaluated and the results are shown in the following Table 1.

### EXAMPLE 2

A folded and twisted yarn A with total fineness of 4,500 denier was prepared, which consisted of three strands of wholly aromatic polyamide filament each comprising 1,000 mono filaments with mono fineness of 1.5 denier.

As shown in Fig. 3, the prepared folded and twisted yarn was passed over a coating roller C fed with a coating solution which included (i) a polytetramethyleneglycol binder having a number average molecular weight of 600 and (ii) a colorant having an average particle size of 5µm dispersed in the binder, from a tank B containing the coating solution by means of an injector H to apply the coating solution to a surface of the folded and twisted yarn A to form a coating layer. Following this, the coated yarn was wound over a winder E to produce a ripcord 3 for optic cable.

After covering an optic fiber 1 with the produced ripcord 3 together with a reinforcing material 2 made of a folded and twisted yarn comprising wholly aromatic polyamide filaments, a resin coating layer 4 was formed over the prepared optic fiber to produce an optic cable with a cross section shown in Fig. 1.

Strength of the ripcord and convenience in distinguishing the ripcord from the optic cable were evaluated and the results are shown in the following Table 1.

### COMPARATIVE EXAMPLE 1

A ripcord for optic cable and an optic cable with a cross section shown in Fig. 1 were produced under the same conditions described in Example 1 except that an alternative coating solution which included (i) an aqueous acrylic resin binder, (ii) a pigment having an average particle size of 5µm dispersed in the binder and (iii) water as a diluent was used instead of the coating solution described in Example 1 and, after applying the coating solution to a surface of the folded and twisted yarn A to form a coating layer, the coated yarn was first passed through a dryer D at 200°C with a speed of 20m/min before winding the yarn over a winder E.

Strength of the ripcord and convenience in distinguishing the ripcord from the optic cable were evaluated and the results are shown in the following Table 1.

### COMPARATIVE EXAMPLE 2

A ripcord for optic cable and an optic cable with a cross section shown in Fig. 1 were produced under the same conditions described in Example 2 except that an alternative coating solution which included (i) an aqueous acrylic resin binder, (ii) a pigment having an average particle size of 5µm dispersed in the binder and (iii) a diluent comprising a combination of water and ethanol as an evaporation promoter was used instead of the coating solution described in Example 2 and, after applying the coating solution to a surface of the folded and twisted yarn A to form a coating layer, the coated yarn was first passed through a dryer D at 200°C with a speed of 20m/min before winding the yarn over a winder E.

Strength of the ripcord and convenience in distinguishing the ripcord from the optic cable were evaluated and the results are shown in the following Table 1.

### COMPARATIVE EXAMPLE 3

A ripcord for optic cable and an optic cable with a cross section shown in Fig. 1 were produced under the same conditions described in Example 1 except that an alternative coating solution which included (i) an aqueous urethane resin binder, (ii) a dye having an average particle size of 5µm dispersed in the binder and (iii) an evaporation promoter comprising methylethylketone was used instead of the coating solution described in Example 1 and, after applying the coating solution to a surface of the folded and twisted yarn A to form a coating layer, the coated yarn was first passed through a dryer D at 200°C with a speed of 20m/min before winding the yarn over a winder E.

Strength of the ripcord and convenience in distinguishing the ripcord from the optic cable were evaluated and the results are shown in the following Table 1.

### EXAMPLE 3

A ripcord for optic cable and an optic cable with a cross section shown in Fig. 1 were produced under the same conditions described in Example 1 except that a folded and twisted yarn A which consisted of (i) a strand of wholly aromatic polyamide filament with 1,500 denier comprising 1,000 mono filaments with mono fineness of 1.5 denier and (ii) another strand of polyethylene filament with total fineness of 1,500 denier was used instead of the folded and twisted yarn described in Example 1.

Strength of the ripcord and convenience in distinguishing the ripcord from the optic cable were evaluated and the results are shown in the following Table 1.

### COMPARATIVE EXAMPLE 4

A ripcord for optic cable and an optic cable with a cross section shown in Fig. 1 were produced under the same conditions described in Example 1 except that an alternative coating solution which included (i) aqueous phenol resin as a binder, (ii) a dye having an average particle size of 10µm dispersed in the binder and (iii) an acetone evaporation promoter was used instead of the coating solution described in Example 1 and, after applying the coating solution to a surface of the folded and twisted yarn A to form a coating layer, the coated yarn was first passed through a dryer D at 200°C with a speed of 20m/min before winding the yarn over a winder E.

Strength of the ripcord and convenience in distinguishing the ripcord from the optic cable were evaluated and the results are shown in the following Table 1.

### COMPARATIVE EXAMPLE 5

A ripcord for optic cable and an optic cable with a cross section shown in Fig. 1 were produced under the same conditions described in Example 1 except that an alternative coating solution which included (i) aqueous epoxy resin as a binder, (ii) a dye having an average particle size of 20µm dispersed in the binder and (iii) a hydrofurane as a evaporation promoter was used instead of the coating solution described in Example 1 and, after applying the coating solution to a surface of the folded and twisted yarn A to form a coating layer, the coated yarn was first passed through a dryer D at 200 °C with a speed of 20m/min before winding the yarn over a winder E.

Strength of the ripcord and convenience in distinguishing the ripcord from the optic cable were evaluated and the results are shown in the following Table 1.

### EXAMPLE 4

A ripcord for optic cable and an optic cable with a cross section shown in Fig. 1 were produced under the same conditions described in Example 1 except that a folded and twisted yarn A which consisted of (i) two strands of wholly aromatic polyamide filament with 1,000 denier, each comprising 1,000 mono filaments with mono fineness of 1.0 denier and (ii) two strands of polyethylene filament with total fineness of 1,500 denier was used instead of the folded and twisted yarn described in Example 1.

Strength of the ripcord and convenience in distinguishing the ripcord from the optic cable were evaluated and the results are shown in the following Table 1.

### COMPARATIVE EXAMPLE 6

A folded and twisted yarn A with total fineness of 4,500 denier was prepared, which consisted of three strands of wholly aromatic polyamide filament each comprising 1,000 mono filaments with mono fineness of 1.5 denier. The prepared folded and twisted yarn A was used to produce a ripcord for optic cable.

After covering an optic fiber 1 with the produced ripcord 3 together with a reinforcing material 2 made of a folded and twisted yarn comprising wholly aromatic polyamide filaments, a resin coating layer 4 was formed over the prepared optic fiber to produce an optic cable with a cross section shown in Fig. 1.

Strength of the ripcord and convenience in distinguishing the ripcord from the optic cable were evaluated and the results are shown in the following Table 1.

### COMPARATIVE EXAMPLE 7

A ripcord for optic cable and an optic cable with a cross section shown in Fig. 1 were produced under the same conditions described in Example 1 except that the binder in the coating solution described in Example 1 was changed to polyethyleneglycol having a number average molecular weight of 80.

Strength of the ripcord and convenience in distinguishing the ripcord from the optic cable were evaluated and the results are shown in the following Table 1.

### COMPARATIVE EXAMPLE 8

A ripcord for optic cable and an optic cable with a cross section shown in Fig. 1 were produced under the same conditions described in Example 1 except that the binder in the coating solution described in Example 2 was changed to polytetramethyleneglycol having a number average molecular weight of 1,150.

Strength of the ripcord and convenience in distinguishing the ripcord from the optic cable were evaluated and the results are shown in the following Table 1.

**TABLE 1 - Evaluation results of mechanical properties of ripcords**

| Section | Strength of ripcord for optic cable (kgf) | Convenience in distinguishing ripcord from optic cable |
|---|---|---|
| Example 1 | 83 | Easy |
| Example 2 | 92 | Easy |
| Comparative Example 1 | 84 | Easy |
| Comparative Example 2 | 91 | Easy |
| Comparative Example 3 | 83 | Easy |
| Example 3 | 74 | Easy |
| Comparative Example 4 | 85 | Easy |
| Comparative Example 5 | 84 | Easy |
| Example 4 | 83 | Easy |
| Comparative example 6 | 92 | Difficult |
| Comparative example 7 | 92 | Easy |
| Comparative example 8 | 91 | Easy |

From the above Table 1, the strength of a ripcord for optic cable was determined using a sample with a length of 250mm at a tension speed of 300mm/min according to ASTM D 885.

The convenience in distinguishing a ripcord from an optic cable was identified by ten (10) panels through sensory evaluation. When the ripcord was easily distinguished from the optic cable by at least eight (8) among them, it was defined as "easy." Conversely, the ripcord which was not easily distinguished by seven (7) or less of the panels was defined as "difficult."

For Comparative Examples 7 and 8, each of the binders has a number average molecular weight beyond a range of 100 to 1,000. Accordingly, these comparative examples show significantly lowered processing effects in application of the coating solutions to the folded and twisted yarns A, compared to Examples 1 and 2.

### INDUSTRIAL APPLICABILITY

As described in detail above, a method of folding and twisting multiple filaments according to the present invention is useful for producing a wholly aromatic polyamide folded and twisted filament used to cover optic fibers in manufacturing optic cables.

The present invention can effectively produce a ripcord for optic cable which is useful for easily cutting and stripping a resin coating layer out of the optic cable.

While the present invention has been described with reference to the accompanying drawings, it will be understood by those skilled in the art that various modifications and variations may be made therein without departing from the scope of the present invention as defined by the appended claims.

## Claims

1. A ripcord for optic cable including a folded and twisted yarn formed by folding and twisting together wholly aromatic polyamide filaments and a coating layer formed on a surface of the folded and twisted yarn, in which the coating layer comprises a binder and a colorant dispersed in the binder, **characterized in that** the binder comprises at least one polymer selected from glycol based polymers having a number average molecular weight ranging from 100 to 1,000.

2. The ripcord according to claim 1, wherein the colorant is one selected from pigment and dye.

3. The ripcord according to claim 1, wherein the coating layer further comprises a fluorescent material.

4. The ripcord according to claim 1 or 2, wherein the colorant has an average particle size ranging from 0.01 to 100µm.

5. The ripcord according to claim 1 or 2, wherein the colorant has an average particle size ranging from 0.1 to 10µm.

6. The ripcord according to claim 1, wherein the glycol based polymers are at least one selected from a group consisting of polyethyleneglycol, polypropyleneglycol and polytetramethyleneglycol.

7. The ripcord according to claim 1, wherein the folded and twisted yarn formed by folding and twisting together wholly aromatic polyamide filaments comprises (i) 50 to 99wt.% of the wholly aromatic polyamide filaments and (ii) 1 to 50wt.% of at least one selected from a group consisting of polyester filament, polyamide filament, polyvinylalcohol filament, rayon filament, polyolefin filament and polybenzonite filament.

8. The ripcord according to claim 1 or 7, wherein the ripcord has strength ranging from 50 to 100kgf.

9. The ripcord according to claim 1 or 7, wherein the ripcord has total fineness ranging from 3,000 to 5,000 denier.

10. A method of manufacturing a ripcord for optic cable comprising:
applying a coating solution, which includes a binder and a colorant dispersed in the binder, to a surface of a folded and twisted yarn formed by folding and twisting together wholly aromatic polyamide filaments to form a coating layer; and
winding the coated yarn over a winding machine,
wherein the binder comprises at least one polymer selected from glycol based polymers having a number average molecular weight ranging from 100 to 1,000.

11. The method according to claim 10, wherein the coating solution is applied to the surface of the folded and twisted yarn A by passing the folded and twisted yarn A over a rotational coating roller C which is partially immersed in a tank B containing the coating solution.

12. The method according to claim 11, wherein a squeezing roller C' is mounted on a top of the coating roller C to squeeze the folded and twisted yarn coated with the coating solution.

13. The method according to claim 10, wherein the coating solution is applied to the surface of the folded and twisted yarn A by passing the folded and twisted yarn A over a coating roller C fed with the coating solution from a tank G containing the coating solution by means of an injector H.

14. The method according to claim 10, wherein the folded and twisted yarn formed by folding and twisting together wholly aromatic polyamide filaments comprises (i) 50 to 99wt.% of the wholly aromatic polyamide filaments and (ii) 1 to 50wt.% of at least one selected from a group consisting of polyester flament, polyamide filament, polyvinylalcohol filament, rayon filament, polyolefin filament and polybenzonite filament.

## Patentansprüche

1. Reißleine für Lichtwellenleiterkabel, beinhaltend ein gefaltetes und gezwirntes Garn, gebildet durch Falten und Zusammenzwirnen vollaromatischer Polyamidfilamente, und eine Überzugsschicht, gebildet auf einer Oberfläche des gefalteten und gezwirnten Garns, wobei die Überzugsschicht ein Bindemittel und ein in dem Bindemittel dispergiertes Färbemittel umfasst, **dadurch gekennzeichnet, dass** das Bindemittel mindestens ein Polymer umfasst, gewählt aus glykolbasierten Polymeren mit einem zahlenmittleren Molekulargewicht im Bereich von 100 bis 1.000.

2. Reißleine nach Anspruch 1, wobei das Färbemittel eines ist, gewählt aus Pigment und Farbstoff.

3. Reißleine nach Anspruch 1, wobei die Überzugsschicht weiterhin ein Fluoreszenzmaterial umfasst.

4. Reißleine nach Anspruch 1 oder 2, wobei das Färbemittel eine durchschnittliche Teilchengröße im Bereich von 0,01 bis 100 µm aufweist.

5. Reißleine nach Anspruch 1 oder 2, wobei das Färbemittel eine durchschnittliche Teilchengröße im Bereich von 0,1 bis 10 µm aufweist.

6. Reißleine nach Anspruch 1, wobei die glykolbasierten Polymere mindestens eines sind, gewählt aus der Gruppe, bestehend aus Polyethylenglykol, Polypropylenglykol und Polytetrame-thylenglykol.

7. Reißleine nach Anspruch 1, wobei das gefaltete und gezwirnte Garn, gebildet durch Falten und Zusammenzwirnen vollaromatischer Polyamidfilamente, (i) 50 bis 99 Gew.-% der vollaromatischen Polyamidfilamente und (ii) 1 bis 50 Gew.-% mindestens eines umfasst, gewählt aus einer Gruppe, bestehend aus Polyesterfilament, Polyamidfilament, Polyvinylalkoholfilament, Rayonfilament, Polyolefinfilament und Polybenzonitfilament.

8. Reißleine nach Anspruch 1 oder 7, wobei die Reißleine eine Festigkeit im Bereich von 50 bis 100 kgf aufweist.

9. Reißleine nach Anspruch 1 oder 7, wobei die Reißleine eine Gesamtfeinheit im Bereich von 3.000 bis 5.000 Denier aufweist.

10. Verfahren zur Herstellung einer Reißleine für Lichtwellenleiterkabel, umfassend:
Aufbringen einer Beschichtungslösung, welche ein Bindemittel und ein in dem Bindemittel dispergiertes Färbemittel umfasst, auf eine Oberfläche eines gefalteten und gezwirnten Garns, gebildet durch Falten und Zusammenzwirnen vollaromatischer Polyamidfilamente, zur Bildung einer Überzugsschicht; und
Aufwickeln des beschichteten Garns über eine Wickelmaschine,
wobei das Bindemittel mindestens ein Polymer umfasst, gewählt aus glykolbasierten Polymeren mit einem zahlenmittleren Molekulargewicht im Bereich von 100 bis 1.000.

11. Verfahren nach Anspruch 10, wobei die Beschichtungslösung auf die Oberfläche des gefalteten und gezwirnten Garns A aufgebracht wird, indem das gefaltete und gezwirnte Garn A über eine Rotationsbeschichtungswalze C geführt wird, welche teilweise in einem Tank B, enthaltend die Beschichtungslösung, eingetaucht ist.

12. Verfahren nach Anspruch 11, wobei eine Abquetschwalze C' auf einer Oberseite der Beschichtungswalze C montiert ist, um das mit der Beschichtungslösung beschichtete, gefaltete und gezwirnte Garn abzuquetschen.

13. Verfahren nach Anspruch 10, wobei die Beschichtungslösung auf die Oberfläche des gefalteten und gezwirnten Garns A aufgebracht wird, indem das gefaltete und gezwirnte Garn A über eine Beschichtungswalze C geführt wird, welche mit der Beschichtungslösung von einem Tank G, enthaltend die Beschichtungslösung, mittels eines Injektors H gespeist wird.

14. Verfahren nach Anspruch 10, wobei das gefaltete und gezwirnte Garn, gebildet durch Falten und Zusammenzwirnen vollaromatischer Polyamidfilamente, (i) 50 bis 99 Gew.-% der vollaromatischen Polyamidfilamente und (ii) 1 bis 50 Gew.-% mindestens eines umfasst, gewählt aus einer Gruppe, bestehend aus Polyesterfilament, Polyamidfilament, Polyvinylalkoholfilament, Rayonfilament, Polyolefinfilament und Polybenzonitfilament.

## Revendications

1. Corde de déchirure pour câble optique comprenant un fil plié et retordu formé en pliant et retordant ensemble des filaments de polyamide entièrement aromatique et une couche de revêtement formée sur une surface du fil plié et retordu, dans laquelle la couche de revêtement comprend un liant et un colorant dispersé dans le liant, caractérisé en que
le liant comprend au moins un polymère choisi parmi les polymères à base de glycol ayant une masse moléculaire moyenne en nombre allant de 100 à 1.000.

2. La corde de déchirure selon la revendication 1, dans laquelle le colorant est un choisi parmi du pigment et de la teinture.

3. La corde de déchirure selon la revendication 1, dans laquelle la couche de revêtement en plus comprend un matériau fluorescent.

4. La corde de déchirure selon la revendication 1 ou 2, dans laquelle le colorant présente une taille moyenne de particules se situant entre 1,01 et 100 µm.

5. La corde de déchirure selon la revendication 1 ou 2, dans laquelle le colorant présente une taille moyenne de particules se situant entre 0,1 et 10 µm.

6. La corde de déchirure selon la revendication 1, dans laquelle les polymères à base de glycol sont au moins un choisi parmi le groupe constitué par le polyéthylènegylcol, le polypropylèneglyol et le polytetraméthylèneglycol.

7. La corde de déchirure selon la revendication 1, dans laquelle le fil plié et retordu est formé en pliant et retordant ensemble des filaments de polyamide entièrement aromatique comprenant (i) 50 à 99 % en poids des filaments de polyamide entièrement aromatique et (ii) 1 à 50 % en poids d'au moins un choisi parmi un groupe constitué par le filament de polyester, le filament de polyamide, le filament de polyvinylalcool, le filament de rayon, le filament de polyoléfine et le filament de polybenzonite.

8. La corde de déchirure selon la revendication 1 ou 7, dans laquelle la corde de déchirure a une solidité allant de 50 à 100 kgf.

9. La corde de déchirure selon revendication 1 ou 7, dans laquelle la corde de déchirure a une finesse totale allant de 3.000 à 5.000 denier.

10. Un procédé pour la fabrication d'une corde de déchirure pour câble optique comprenant:
l'application d'une solution de revêtement, qui comprend un liant est un colorant dispersé dans le liant, à une surface d'un fil plié et retordu formé en pliant et retordant ensemble des filaments de polyamide entièrement aromatique afin de former une couche de revêtement; et
le bobinage du fil recouvert sur une bobineuse,
dans lequel le liant comprend au moins un polymère choisi parmi les polymères à base de glycol ayant une masse moléculaire moyenne en nombre allant de 100 à 1.000.

11. Le procédé selon la revendication 10, dans lequel la solution de revêtement est appliquée à la surface du fil plié et retordu A en passant le fil plié et retordu A sur un rouleau de recouvrement rotatif C qui est partiellement immergé dans un réservoir B contenant la solution de recouvrement.

12. Le procédé selon la revendication 11, dans lequel un rouleau d'essorage C' est monté sur le rouleau de recouvrement C afin d'essorer le fil plié et retordu recouvert de la solution de recouvrement.

13. Le procédé selon la revendication 10, dans lequel la solution de recouvrement est appliquée à la surface du fil plié et retordu A en passant le fil plié et retordu A sur un rouleau de recouvrement C alimenté avec la solution de recouvrement a partir d'un réservoir G contenant la solution de recouvrement par les moyens d'un injecteur H.

14. Le procédé selon la revendication 10, dans lequel le fil plié et retordu formé en pliant et retordant ensemble des filaments de polyamide entièrement aromatique comprenant (i) 50 à 99 % en poids des filament entièrement aromatique et (ii) 1 à 50 % en poids d'au moins un choisi parmi un groupe constitué par le filament de polyester, le filament de polyamide, le filament de polyvinylalcool, le filament de rayon, le filament de polyoléfine et le filament de polybenzonite.
